# FASCICULE DE BREVET EUROPEEN

(11) **EP 1 928 251 B1**
(45) Date de publication et mention de la délivrance du brevet: **12.01.2011**
(21) Numéro de dépôt: 06808308.8
(22) Date de dépôt: 12.09.2006
(51) Int. Cl.: A21B 3/13, A21D 8/06, A21D 13/00

(54) **TRANCHE DE PAIN DE MIE, PAIN DE MIE, PROCEDE DE FABRICATION DE CE PAIN DE MIE ET MOULE EMPLOYE DANS CE PROCEDE**
TOASTBROTSCHEIBE, TOASTBROT, VERFAHREN ZU DESSEN HERSTELLUNG UND DAFÜR GEEIGNETER BROTKASTEN
BATCH BREAD SLICE, BATCH BREAD, METHOD FOR MAKING SAME AND BREAD PAN USED THEREFOR

(30) Priorité: 23.09.2005 FR 0552852
(43) Date de publication de la demande: 11.06.2008
(73) Titulaire: Jacquet Panification, 63360 Saint-Beauzire (FR)
(72) Inventeur: PIEZEL, Xavier, F-63310 Randan (FR); THIAUDIERE, Jean-Luc, F-63200 Mozac (FR)
(74) Mandataire: Cabinet Plasseraud
(86) Numéro de dépôt international: PCT/FR2006/050870
(87) Numéro de publication internationale: WO 2007/034098

(56) Documents cités:
- DE-A1- 2 643 788
- US-A- 2 938 649
- US-A- 5 048 707

## Description

La présente invention se rapporte au domaine des pains de mie. Plus précisément, elle concerne une tranche d'un tel pain de mie et un pain de mie à partir duquel une telle tranche peut être obtenue. L'invention concerne également un procédé de fabrication de cette tranche et un moule de cuisson adapté pour être utilisé dans ce procédé.

Comme ceci est précisé dans le document BID 7-8/94 publié par la Direction Générale de la Concurrence, de la Consommation et de la Répression des Fraudes (DGCCRF du gouvernement français), les pains de mie sont des pains spéciaux, qui contiennent au moins une substance choisie parmi de la matière grasse, du sucre et un dérivé laitier. Les pain de mie sont cuits dans des moules et leur mie est particulièrement dense et moelleuse, tandis que la croûte est fine et peu rigide. La plupart du temps, les pains de mie sont tranchés transversalement avant d'être vendu. Les tranches ainsi obtenues sont actuellement soit de forme carrée, soit de forme circulaire. De telles formes sont appropriées lorsque les tranches sont employées dans la réalisation de toasts ou de sandwichs. Elles ne le sont toutefois pas dans d'autres applications.

Une tranche de pain de mie carrée ou circulaire est compacte, ce qui contribue à sa rigidité. Du fait des faibles caractéristiques mécaniques de la croûte à la périphérie d'une tranche de pain de mie, modifier la forme d'une telle tranche conduit parfois à trop réduire sa rigidité. C'est pourquoi peu de formes de tranche de pain de mie peuvent actuellement être proposée, ce qui constitue un inconvénient.

US 5 048 707 A divulgue un moule de pain de mie avec des cannelures sur toutes les surfaces. Ce moule permet la production de pains de forme d'accordéon, augmentant la résistance vis-à-vis de la pression et de la fracture. La forme spécifique du pain facilite aussi le tranchage du pain, et prédefinit l'épaisseur des tranches de pain. Deux des parois verticales divergent légèrement vers le haut. Un pain obtenu en utilisant le dit moule est aussi divulgué. Les cannelures définissent les lignes de coupure des tranches, ainsi facilitant le tranchage et l'uniformité de la taille des tranches. Les cannelures augmentent la surface exposé à la chaleur de cuisson, ainsi accélérant la cuisson de pains de grande taille.

L'invention a au moins pour but de proposer une tranche qui, bien que provenant d'un pain de mie, présente une forme différente des deux évoquées ci-dessus, tout en restant suffisamment rigide pour pouvoir être aisément manipulée manuellement.

A cet effet, l'invention a pour objet une tranche de pain de mie, comportant de la mie, de la croûte en périphérie de cette mie et deux faces principales et opposées, dont une au moins est définie essentiellement par ladite mie, caractérisée en ce qu'elle est allongée et comporte au moins un premier bord longitudinal qui présente une section transversale non rectiligne, pour l'essentiel, régulièrement courbe sur au moins une partie de sa longueur et qui est défini par la croûte.

Selon d'autres caractéristiques avantageuses de cette tranche de pain de mie :
- elle comporte un deuxième bord longitudinal qui se trouve à l'opposé du premier bord longitudinal et qui est défini par la croûte ;
- le deuxième bord longitudinal présente une section transversale non rectiligne sur au moins une partie de sa longueur ;
   ledit premier bord longitudinal au moins est globalement convexe sur au moins une partie de sa longueur;
- elle comporte deux bords transversaux et opposés, qui sont définis par la croûte et qui relient les premier et deuxième bords longitudinaux entre eux ;
- l'un des bords transversaux présente, sur au moins une partie de sa longueur, une section transversale non rectiligne ;
- elle comporte une longueur, une largeur et un rapport largeur sur longueur compris entre 0,31 et 0,61.

L'invention a également pour objet un pain de mie comprenant un coeur en mie et plusieurs faces en croûte. Ce pain de mie est destiné à faire l'objet d'un tranchage. L'une au moins de ses faces comporte des cannelures adaptées pour, après le tranchage, former lesdits premiers bords longitudinaux de tranches telles que définies ci-dessus.

Avantageusement, chaque cannelure prédéfinit l'épaisseur de l'une desdites tranches.

L'invention a en outre pour objet un procédé de fabrication d'une tranche de pain de mie, dans lequel on utilise un moule de cuisson comprenant plusieurs faces internes, **caractérisé en ce que** l'une au moins de ces faces internes présente des cannelures et en ce que ce procédé comprend des étapes dans lesquelles :
b) dans le moule, on fait cuire de la pâte levée qui devient un pain de mie, puis
c) on démoule le pain de mie dont une face au moins présente des cannelures complémentaires de celles du moule, puis
f) dans le pain de mie et parallèlement aux cannelures de ce pain de mie, on découpe des tranches telles que définies ci-dessus.

Selon d'autres caractéristiques avantageuses de ce procédé :
- il comporte une étape précédant l'étape b) et dans laquelle :
   a) on fait lever la pâte dans le moule.
- à l'issue de l'étape b), le pain de mie comporte plusieurs faces allongées parmi lesquelles la face pourvue de cannelures et une autre face du pain de mie sont deux faces opposées plus larges que les autres faces allongées du pain de mie, le procédé comprenant des étapes qui suivent l'étape c), qui précèdent l'étape f) et dans lesquelles :
   d) sur un convoyeur, on fait basculer le pain de mie sur l'une de ses deux faces les plus larges, puis
   e) on laisse refroidir le pain de mie sur le convoyeur tandis que ce dernier achemine le pain de mie reposant de manière sensiblement stable sur l'une de ses deux faces les plus larges.

L'invention a encore pour objet un moule de cuisson d'un pain de mie, ce moule comprenant deux parois allongées en regard qui délimitent partiellement entre elles un volume de moulage, ce moule étant **caractérisé en ce qu'**il est apte à être utilisé pour la mise en oeuvre d'un procédé tel que défini ci-dessus et en ce que la face interne de l'une au moins de ses deux parois allongées présente des cannelures transversales, les deux parois allongées ayant une largeur plus grande qu'une distance moyenne entre elles.

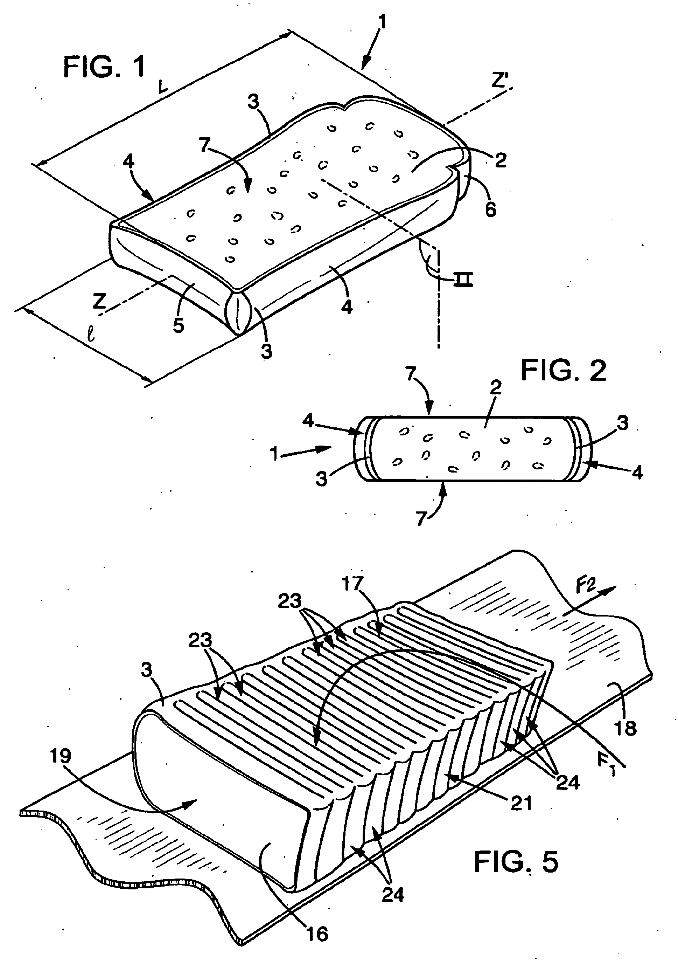

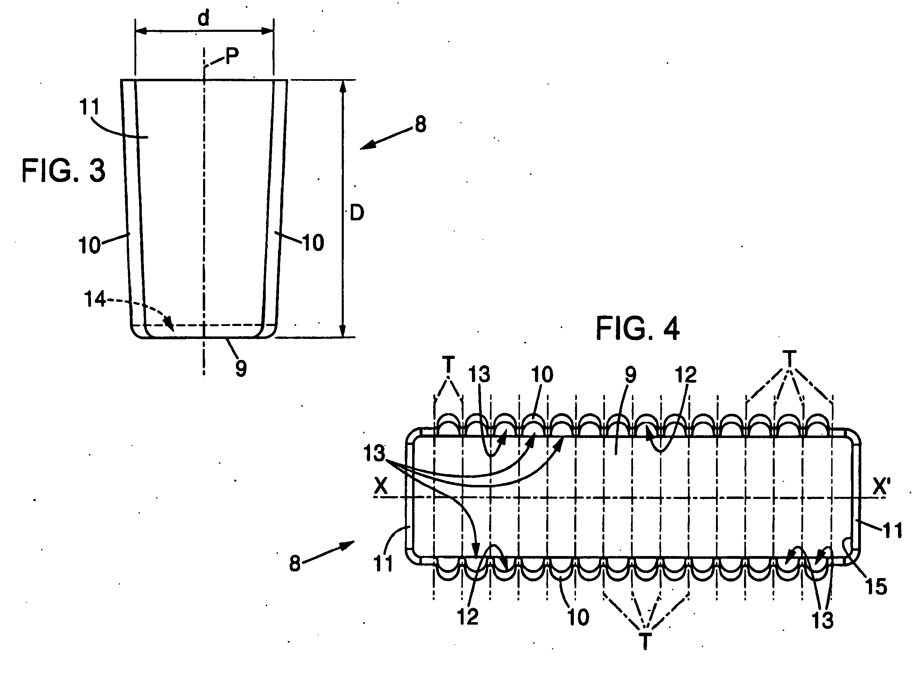

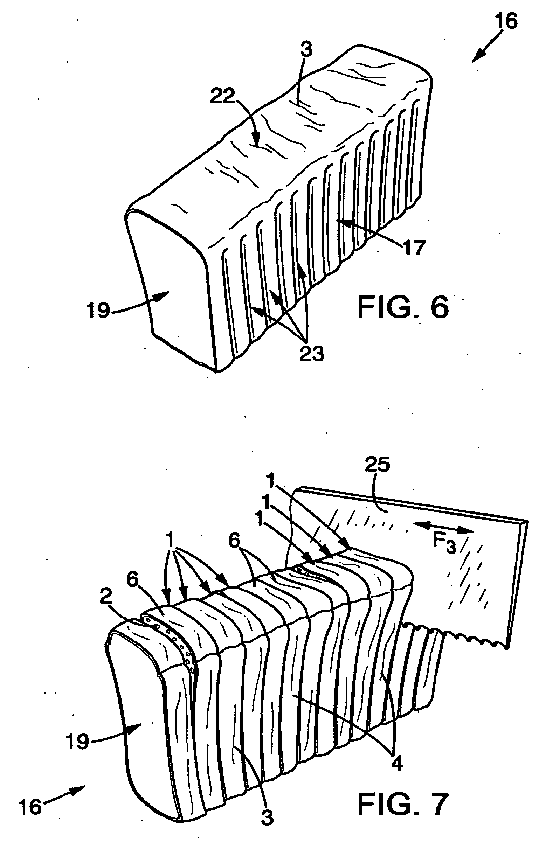

L'invention sera bien comprise à la lecture de la description qui va suivre, donnée uniquement à titre d'exemple et faite en se référant aux dessins annexés, parmi lesquels :
- **la** **figure 1** est une vue en perspective d'une tranche de pain de mie conforme à l'invention ;
- **la** **figure 2** est une coupe transversale selon le plan II représenté à la figure 1 ;
- **la** **figure 3** est une élévation d'un moule de cuisson d'un pain de mie à partir duquel est obtenue la tranche des figures 1 et 2, ce moule étant vu par une extrémité ;
- **la** **figure 4** est une vue de dessus du moule représenté à la figure 3 ;
- **la** **figure 5** est une vue en perspective illustrant une étape de fabrication du pain de mie à partir duquel sera obtenue la tranche des figures 1 et 2 ;
- **la** **figure 6** est une vue en perspective du pain de mie à partir duquel sera obtenue la tranche des figures 1 et 2 ; et
- **la** **figure 7** est une vue en perspective illustrant le tranchage du pain de mie représenté à la figure 6.

La tranche de pain de mie 1 représentée à la figure 1 est allongée selon une direction Z-Z'. Elle comporte un coeur fait de mie 2, ainsi qu'une croûte périphérique 3, qui entoure ce coeur, qui présente une forme globalement rectangulaire et forme quatre bords successifs de la tranche de pain de mie. Deux de ces bords sont des bords longitudinaux référencés 4 et reliés entre eux par les deux autres bords, qui sont des bords d'extrémité référencés 5 et 6.

La référence L et la référence 1 désignent respectivement la longueur et la largeur de la tranche 1, qui présente un rapport largeur sur longueur avantageusement compris entre 0,31 et 0,61, de préférence compris entre 0,4 et 0,5, par exemple de l'ordre de 0,46.

Outre les bords 4 à 6, la tranche 1 comporte deux faces principales 7 opposées, qui sont essentiellement définies par la mie 2.

Ainsi qu'on peut bien le voir à la figure 2, chaque bord longitudinal 4 est convexe et sa section transversale est non rectiligne. Dans l'exemple représenté, cette section transversale est, pour l'essentiel, régulièrement courbe.

Des essais ont montré que, grâce à la forme de ses bords longitudinaux 4, la tranche 1 est suffisamment rigide pour pouvoir être aisément manipulé manuellement, malgré sa forme allongée. En d'autres termes, cette tranche 1 n'est ni circulaire, ni carrée, tout en présentant une rigidité satisfaisante, conformément au but de l'invention.

Grâce à sa forme allongée, la tranche 1 peut être aisément trempée dans un liquide contenu dans un boL Elle est donc particulièrement appropriée pour être consommée au petit-déjeuner, alors que tel n'est pas le cas des tranches de pain de mie actuellement disponibles sur le marché.

Comme les bords longitudinaux 4, le bord d'extrémité 5 est convexe. Il a globalement la même section transversale que les bords longitudinaux 4.

Des essais ont montré que la forme des bords 4 et 5 facilite la préhension manuelle de la tanche 1, ce qui est avantageux.

La tranche 1 résulte du tranchage d'un pain de mie cuit dans le moule 8 représenté aux figures 3 et 4. Ce moule 8 est allongé selon une direction X-X'. Il comporte un fond longitudinal 9, ainsi que 4 parois montantes, qui s'élèvent à partir de ce fond 9 et se succèdent. Deux de ces parois montantes sont des parois longitudinales 10 en regard, que les deux autres parois montantes 11 relient entre elles, aux extrémités du moule 8.

Les parois longitudinales 10 ont une largeur D, qui est plus grande que la distance d entre elles.

Les parois longitudinales 10 sont ondulées régulièrement, de telle manière que leurs faces internes respectives 12 présentent des cannelures 13 symétriques les unes des autres par rapport à un plan P de symétrie du moule 8. Ce plan P est plus précisément un plan vertical s'étendant selon la direction longitudinale X-X'.

Les cannelures 13 sont transversales par rapport à la direction longitudinale X-X' et s'élèvent à partir du fond 9. Elles se succèdent régulièrement le long du moule 8 et sont sensiblement identiques entre elles. La face interne du fond 9 définit également des cannelures 14, qui relient entre elles les cannelures 13 d'une des parois 10 et les cannelures 13 de l'autre paroi 10.

Le fond 9 et les parois 10 et 11 délimitent conjointement un volume de moulage 15, ouvert sur le dessus dans la mesure où les bords supérieurs des parois 10 et 11 délimitent une ouverture supérieure du moule 8.

La fabrication d'un pain de mie à l'aide du moule 8 commence par le dépôt d'une pâte à pain dans le volume 15, où on laisse cette pâte lever. Une fois qu'elle a levé, la pâte est cuite dans le moule 8, après quoi elle forme un pain de mie référencé 16 aux figures 5 à 7. Après avoir été saisi par une machine munie à cet effet de ventouses ou d'autres moyens de préhension, le pain de mie 16 est démoulé en étant coulissé vers le haut, hors du moule, par cette machine qui est généralement appelée « démouleur » et qui est connue en elle-même. Une fois que le pain de mie 16 a été déposé en dehors du moule 8, on le fait basculer sur l'une de ses deux faces longitudinales les plus larges 17, ce que symbolise la flèche F₁ à la figure 5. Ensuite, on laisse refroidir le pain de mie 16, alors qu'il repose de manière stable sur la bande transporteuse 18 d'un convoyeur, qui l'achemine lentement vers un dispositif de tranchage, ce que symbolise la flèche F₂. Comme il est stable lors de son acheminement par la bande 18, le pain de mie 16 parvient avec l'orientation appropriée à ce dispositif de tranchage.

Une fois refroidi, le pain de mie 16 est tel qu'illustré à la figure 6. Il a globalement une forme parallélépipédique et comporte deux faces d'extrémité 19 et quatre faces allongées et longitudinales 17, 21 et 22. Parmi ces quatre faces longitudinales, les deux faces 17 sont les plus larges. Elles sont opposées l'une de l'autre et présentent des cannelures 23 complémentaires des cannelures 13. La face 21 présente également des cannelures, qui sont référencées 24 et sont complémentaires des cannelures 14 du fond du moule 8.

Le tranchage du pain de mie 16 s'effectue transversalement, selon des plans qui sont référencés T à la figure 4, qui se succèdent à intervalle régulier le long du pain de mie 16 et qui s'étendent entre deux cannelures 23 successives et entre deux cannelures 24 successives. La figure 7 illustre schématiquement le tranchage du pain de mie 16 à l'aide d'une lame 25 effectuant un mouvement de va-et-vient F3. A l'issue de ce tranchage, le pain de mie 16 est devenu une succession de tranches globalement identiques à la tranche 1, à l'exception des deux tranches d'extrémité, dont une face principale est définie par de la croûte et non par de la mie.

## Revendications

1. Tranche de pain de mie, comportant de la mie (2), de la croûte (3) en périphérie de cette mie (2) et deux faces principales et opposées (7), dont une au moins est définie essentiellement par ladite mie (2), **caractérisée en ce qu'**elle est allongée et comporte au moins un premier bord longitudinal (4) qui présente une section transversale non rectiligne, pour l'essentiel, régulièrement courbe sur au moins une partie de sa longueur et qui est défini par la croûte (3).

2. Tranche selon la revendication 1, qui comporte un deuxième bord longitudinal (4) qui se trouve à l'opposé du premier bord longitudinal (4) et qui est défini par la croûte (3).

3. Tranche selon la revendication 2, dont le deuxième bord longitudinal (4) présente une section transversale non rectiligne sur au moins une partie de sa longueur.

4. Tranche selon l'une quelconque des revendications précédentes, dans laquelle ledit premier bord longitudinal (4) au moins est globalement convexe sur au moins une partie de sa longueur.

5. Tranche selon la revendication 4 et l'une quelconque des revendications 2 et 3, dans laquelle ledit deuxième bord longitudinal (4) est globalement convexe sur au moins une partie de sa longueur.

6. Tranche selon l'une quelconque des revendications 2, 3 et 5, comportant deux bords transversaux et opposés (5, 6), qui sont définis par la croûte (3) et qui relient les premier et deuxième bords longitudinaux (4) entre eux.

7. Tranche selon la revendication 6, dont l'un (5) des bords transversaux présente, sur au moins une partie de sa longueur, une section transversale non rectiligne.

8. Tranche selon l'une quelconque des revendications précédentes, qui comporte une longueur (L), une largeur (l) et un rapport largeur sur longueur compris entre 0,31 et 0,61.

9. Pain de mie comprenant un coeur en mie (2) et plusieurs faces (17, 19, 21, 22) en croûte (3), ce pain de mie étant destiné à faire l'objet d'un tranchage, **caractérisé en ce que** l'une au moins desdites faces comporte des cannelures (23) adaptées pour, après le tranchage, former lesdits premiers bords longitudinaux (4) de tranches (1) selon l'une quelconque des revendications précédentes.

10. Pain de mie selon la revendication 9, dans lequel chaque cannelure (23) prédéfinit l'épaisseur de l'une desdites tranches (1).

11. Procédé de fabrication d'une tranche (1) de pain de mie, dans lequel on utilise un moule de cuisson (8) comprenant plusieurs faces internes (12), **caractérisé en ce que** l'une (12) au moins de ces faces internes présente des cannelures (13) et **en ce que** ce procédé comprend des étapes dans lesquelles :
b) dans le moule (8), on fait cuire de la pâte levée qui devient un pain de mie, puis
c) on démoule le pain de mie (16) dont une face (17) au moins présente des cannelures (23) complémentaires de celles (13) du moule (8), puis
f) dans le pain de mie et parallèlement aux cannelures (23) de ce pain de mie, on découpe des tranches (1) selon l'une quelconque des revendications 1 à 8.

12. Procédé selon la revendication 11, qui comporte une étape précédant l'étape b) et dans laquelle :
a) on fait lever la pâte dans le moule (8).

13. Procédé selon l'une quelconque des revendications 11 et 12, dans lequel, à l'issue de l'étape b), le pain de mie (16) comporte plusieurs faces allongées (17, 21, 22) parmi lesquelles la face (17) pourvue de cannelures (23) et une autre face (17) du pain de mie (16) sont deux faces opposées plus larges que les autres faces allongées (21, 22) du pain de mie (16), le procédé comprenant des étapes qui suivent l'étape c), qui précèdent l'étape f) et dans lesquelles :
d) sur un convoyeur (18), on fait basculer le pain de mie (16) sur l'une de ses deux faces les plus larges (17), puis
e) on laisse refroidir le pain de mie (16) sur le convoyeur (18) tandis que ce dernier achemine le pain de mie (16) reposant de manière sensiblement stable sur l'une de ses deux faces les plus larges (17).

14. Moule de cuisson d'un pain de mie (16), ce moule comprenant au moins deux parois allongées en regard (10) qui délimitent partiellement entre elles un volume de moulage (15), ce moule étant **caractérisé en ce qu'**il est apte à être utilisé pour la mise en oeuvre d'un procédé selon l'une quelconque des revendications 11 à 13 et **en ce que** la face interne (12) de l'une au moins de ses deux parois allongées (10) présente des cannelures transversales (13), les deux parois allongées (10) ayant une largeur (D) plus grande qu'une distance moyenne (d) entre elles.

## Claims

1. A slice of batch bread comprising crumb (2), crust (3) around the periphery of this crumb (2) and two main and opposite faces (7), at least one of which is essentially defined by said crumb (2), **characterized in that** it is elongate and comprises at least one first longitudinal edge (4) which has a cross section that is non-rectilinear, essentially, evenly curved over at least part of its length and which is defined by the crust (3).

2. The slice as claimed in claim 1 which comprises a second longitudinal edge (4) which lies opposite the first longitudinal edge (4) and which is defined by the crust (3).

3. The slice as claimed in claim 2, the second longitudinal edge (4) of which has a cross section that is non-rectilinear over at least part of its length.

4. The slice as claimed in any one of the preceding claims, in which said first longitudinal edge (4) at least is, on the whole, convex over at least part of its length.

5. The slice as claimed in claim 5 and either one of claims 2 and 3, in which said second longitudinal edge (4) is, on the whole, convex over at least part of its length.

6. The slice as claimed in any one of claims 2, 3 and 5, comprising two transverse and opposite edges (5, 6) which are defined by the crust (3) and which connect the first and second longitudinal edges (4) together.

7. The slice as claimed in claim 6, of which one (5) of the transverse edges has, over at least part of its length, a non-rectilinear cross section.

8. The slice as claimed in any one of the preceding claims which has a length (L), a width (ℓ) and a width-to-length ratio of between 0.31 and 0.61.

9. A loaf of batch bread comprising a crumb interior (2) and several faces (17, 19, 21, 22) of crust (3), this batch bread being intended to be sliced, **characterized in that** at least one of said faces has fluting (23) designed to form, after slicing, said first longitudinal edges (4) of slices (1) as claimed in any one of the preceding claims.

10. The loaf of batch bread as claimed in claim 10, in which each flute of the fluting (23) predefines the thickness of one of said slices (1).

11. A method of producing a slice (1) of batch bread, in which a baking tin (8) comprising several internal faces (12) is used, **characterized in that** at least one (12) of these internal faces has fluting (13) and **in that** this method involves steps in which:
b) the risen dough is baked in the tin (8) to become a loaf of batch bread, then
c) the loaf of bread (16), at least one face (17) of which has fluting (23) to complement that (13) of the tin (8), is turned out of the tin, then f) slices (1) as claimed in any one of claims 1 to 9 are cut from the loaf of batch bread and parallel to the fluting (23) of this loaf.

12. The method as claimed in claim 11, which involves a step preceding step b) and in which:
a) the dough is left to rise in the tin (8).

13. The method as claimed in either one of claims 11 and 12 in which, after step b), the loaf of batch bread (16) has several elongate faces (17, 21, 22) among which the face (17) with the fluting (23) and another face (17) of the loaf (16) are two opposite faces wider than the other elongate faces (21, 22) of the loaf of bread (16), the method involving steps following on from step c) and preceding step f) and in which:
d) on a conveyor (18), the loaf of batch bread (16) is tipped over onto one of its two widest faces (17), then
e) the loaf of batch bread (16) is left to cool on the conveyor (18) while the latter carries the loaf (16) resting in a sensibly stable manner on one of its two widest faces (17).

14. A tin for baking a loaf of batch bread (16), this tin comprising at least two opposed elongate walls (10) which partially together delimit a shaping volume (15), this tin being **characterized in that** it can be used to implement a method as claimed in any one of claims 11 to 13 and **in that** the internal face (12) of at least one of its two elongate walls (10) has transverse fluting (13), the two elongate walls (10) having a width (D) that is greater than the mean distance (d) between them.

## Patentansprüche

1. Toastbrotscheibe, mit einer Krume (2), einer Kruste (3) am Rand der Krume (2) und zwei einander gegenüberliegenden Hauptseiten (7), von denen mindestens eine wesentlich durch die Krume (2) festgelegt ist,
**dadurch gekennzeichnet, dass**
sie langgestreckt ist und mindestens eine erste Längskante (4) aufweist, die einen nicht geradlinigen Querschnitt aufweist, der sich im Wesentlichen zumindest auf einem Teil ihrer Länge gleichmäßig krümmt, und die durch die Kruste (3) festgelegt ist.

2. Scheibe nach Anspruch 1, die eine zweite Längskante (4) aufweist, die der ersten Längskante (4) gegenüberliegt und die durch die Kruste (3) festgelegt ist.

3. Scheibe nach Anspruch 2, wobei die zweite Längskante (4) einen nicht geradlinigen Querschnitt auf zumindest einem Teil ihrer Länge aufweist.

4. Scheibe nach einem der vorhergehenden Ansprüche, wobei die erste Längskante (4) zumindest in ihrer Gesamtheit auf mindestens einem Teil ihrer Länge konvex ist.

5. Scheibe nach Anspruch 4 und nach einem der Ansprüche 2 und 3, wobei die zweite Längskante (4) in ihrer Gesamtheit auf mindestens einem Teil ihrer Länge konvex ist.

6. Scheibe nach einem der Ansprüche 2, 3 und 5, mit zwei sich gegenüberliegende Querkanten (5, 6), die durch die Kruste (3) festgelegt sind und welche die erste und zweite Längskanten (4) miteinander verbinden.

7. Scheibe nach Anspruch 6, wobei eine der Querkanten (5) auf zumindest einem Teil ihrer Länge einen nicht geradlinigen Querschnitt aufweist.

8. Scheibe nach einem der vorhergehenden Ansprüche, die eine Länge (L), eine Breite (I) und ein Breiten-Längen-Verhältnis zwischen 0,31 und 0,61 aufweist.

9. Toastbrot mit einem Krumenkern (2) und mehreren Seiten (17, 19, 21, 22) aus Kruste (3), wobei das Toastbrot als Gegenstand eines Zerschneidens dienen soll,
**dadurch gekennzeichnet, dass**
mindestens eine der Seiten Rillen (23) aufweist, die derart ausgebildet sind, um nach dem Zerschneiden die ersten Längskanten (4) der Scheiben (1) nach einem der vorhergehenden Ansprüche zu bilden.

10. Toastbrot nach Anspruch 9, wobei jede Rille (23) die Dicke einer der Scheiben (1) vorbestimmt.

11. Verfahren zur Herstellung einer Scheibe (1) des Toastbrotes, wobei eine Backform (8) mit mehreren Innenseiten (12) verwendet wird,
**dadurch gekennzeichnet, dass**
mindestens eine der Innenseiten (12) Rillen (13) aufweist und dass das Verfahren Schritte aufweist in denen:
b) der Hefeteig in der Backform (8) zu einem Toastbrot gebacken wird und dann
c) das Toastbrot (16) aus der Form genommen wird, wobei mindestens eine Seite (17) Rillen (23) aufweist, die komplementär zu den jeweiligen Rillen (13) der Backform (8) sind und dann
f) das Toastbrot parallel zu den Rillen (23) des Toastbrotes in Scheiben (1) nach einem der Ansprüche 1 bis 8 aufgeschnitten wird.

12. Verfahren nach Anspruch 11, welches einen dem Schritt b) vorangehenden Schritt aufweist in dem:
a) man den Teig in der Backform (8) aufgehen lässt.

13. Verfahren nach einem der Ansprüche 11 und 12, wobei am Ende des Schrittes b), das Toastbrot (16) mehrere langgestreckte Seiten (17, 21, 22) aufweist, unter denen die Seite (17), die mit Rillen (23) versehen ist und eine andere Seite (17) des Toastbrotes (16), zwei sich gegenüberliegenden Seiten sind, welche breiter sind als die anderen langgestreckten Seiten (21,22) des Toastbrotes (16), wobei das Verfahren die Schritte nach dem Schritt c) und vor dem Schritt f) aufweist und bei dem
d) das Toastbrot (16) auf ein Förderband (18) auf eine seiner beiden breiteren Seiten (17) gekippt wird und
e) man das Toastbrot (16) während dieser letzten Beförderung auf dem Förderband (18) abkühlen lässt, wobei das Toastbrotes (16) im Wesentlichen stabil auf einer seiner beiden breiteren Seiten (17) liegt.

14. Backform für ein Toastbrot (16), wobei die Form mindestens zwei langgestreckte gegenüberliegende Wände (10) aufweist, die teilweise zwischen sich ein Volumen einer Form (15) begrenzen, wobei die Form ist
**dadurch gekennzeichnet ist, dass**
sie geeignet ist, zur Durchführung eines Verfahrens nach einem der Ansprüche 11 bis 13 eingesetzt zu werden, und dass die Innenseite (12) auf mindestens einer ihrer beiden langgestreckten Wände (10) quer verlaufende Rillen (13) aufweist und die zwei langgestreckten Wände (10) eine Breite (D) aufweisen, die größer ist als ein durchschnittlicher Abstand (d) zwischen ihnen.
